# EUROPEAN PATENT APPLICATION

(11) **EP 2 833 528 A1**
(43) Date of publication of application: **04.02.2015**
(21) Application number: 14175489.5
(22) Date of filing: 02.07.2014
(51) Int. Cl.: H02M 1/14

(54) **Low-ripple power supply**

(30) Priority: 02.08.2013 TW 102127851
(71) Applicant: Algoltek, Inc., Hsinchu County 30274 (TW)
(72) Inventor: Zhang, Dalee, 30274 Hsinchu County (TW); Chan, Sheng-Chieh, 30274 Hsinchu County (TW); Lee, Tzuen-Hwan, 30274 Hsinchu County (TW)
(74) Representative: Lang, Christian

(57) **Abstract**

The present invention is a low-ripple power supply (100) comprising a clock generator (10), a plurality of charge pump modules (20), and an adder unit (30). The low-ripple power supply inputs each of a plurality of clock signals generated by the clock generator (10) into each of the plurality of charge pump modules (20). Since each of the plurality of charge pump modules (20) sends the inputted corresponding clock signal into two paths to be inputted into the first and the second charge pump (23), respectively, and the corresponding clock signal inputted into the second charge pump (23) undergoes an inversion by the inverter, by adding the first voltage outputted by the first charge pump (21) and the second voltage outputted by the second charge pump (23), the ripples may be eliminated; finally, the adder unit (30) adds the voltages outputted by each of the plurality of charge pump modules (20) to yield a low-ripple DC voltage.

## Description

### FIELD OF THE INVENTION

The invention relates to a low-ripple power supply, and more particularly, to a low-ripple power supply manufactured using present electronic circuit devices entirely, having low cost and feasibility of mass production, and comprising a plurality of charge pump modules.

### BACKGROUND OF THE INVENTION

Power supplies are mandatory devices for all electronic products, and the main function is to convert the voltage inputted to the power supply into direct current (DC) voltage to be supplied to connected electronic products. Power supplies come in many varieties, which mainly include switching-mode power supplies, transformers, rectifiers, etc.

However, present power supplies commonly encounter issues of considerable ripples during usage regardless of their type, which result in the instability of the operation of electronic products. Moreover, the electronic product may occasionally blow the fuse or be damaged due to the ripple of the power supply being too large.

Therefore, under the prerequisite of enhancing popularity and effectively reducing costs of manufacture and usage, the production of a highly reliable, highly stable, compact, and cost effective low-ripple power supply is a crucial topic for not only the power supply industry but also the entire electronic products supply chains.

### SUMMARY OF THE INVENTION

The present invention is a low-ripple power supply comprising a clock generator, a plurality of charge pump modules, and an adder unit. The low-ripple power supply inputs each of a plurality of clock signals with different phases generated by the clock generator into each of the plurality of charge pump modules to output DC voltages with the ripples eliminated. The adder unit then adds the DC voltages outputted by each of the plurality of charge pump modules to yield a low-ripple output voltage.

The invention provides a low-ripple power supply, comprising: a clock generator, outputting a plurality of clock signals, wherein each of the plurality of clock signals has a different phase; a plurality of charge pump modules, electrically connected with the clock generator and each inputted with a corresponding clock signal of the plurality of clock signals, wherein the each of the plurality of charge pump modules comprises: a first charge pump, inputted with the corresponding clock signal and outputting a first voltage; an inverter, inputted with the corresponding clock signal and outputting an inverted corresponding clock signal that is the inverse of the corresponding clock signal; and a second charge pump, inputted with the inverted corresponding clock signal and outputting a second voltage; and an adder unit, inputted with and adding the first voltage and the second voltage of each of the plurality of charge pump modules and outputting an output voltage.

The implementation of the present invention may at least achieve the following improvements:
(1) utilize present electronic circuit devices to avoid extra costs and decrease the complexity of circuit manufacture; and
(2) output a low-ripple output voltage that overcomes the shortcomings of output voltage ripples of present power supplies.

The detailed features and advantages of the invention are described in the detailed description of the invention for those skilled in the art to understand, make, and use the invention and to easily understand the purposes and advantages of the invention according to the detailed description, claims, and drawings.

### BRIEF DESCRIPTION OF THE DRAWINGS

The invention as well as a preferred mode of use, further objectives and advantages thereof will be best understood by reference to the following detailed description of illustrative embodiments when read in conjunction with the accompanying drawings, wherein:
FIG. 1 is a block diagram of a low-ripple power supply according to an embodiment of the invention; and
FIG. 2 is a block diagram of a charge pump module according to an embodiment of the invention.

### DETAILED DESCRIPTION OF THE INVENTION

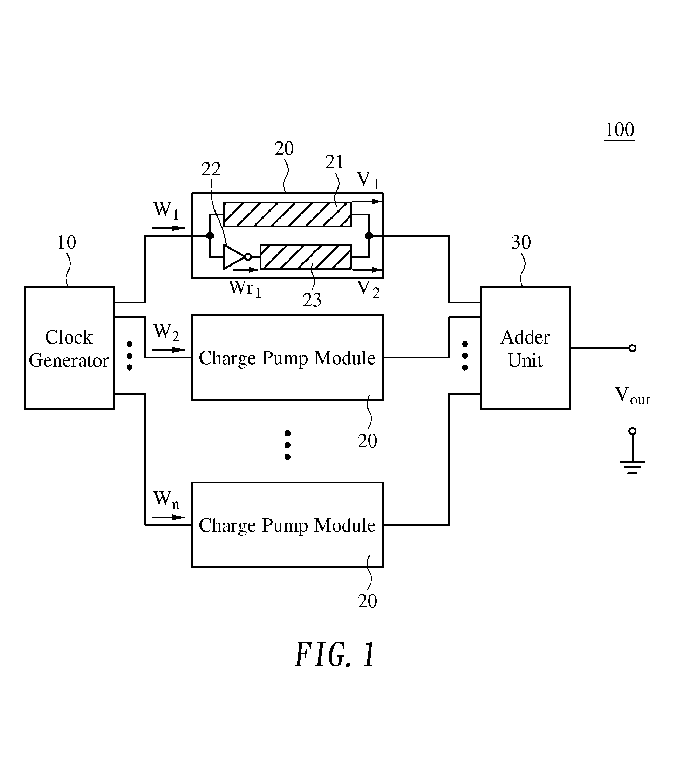

FIG. 1 shows an embodiment of the low-ripple power supply 100 comprising a clock generator 10, a plurality of charge pump modules 20, and an adder unit 30, wherein each of the plurality of charge pump modules 20 comprises a first charge pump 21, an inverter 22, and a second charge pump 23.

As shown in FIG. 1, the clock generator 10 outputs a plurality of clock signals (W1∼Wn), wherein each of the plurality of clock signals has a different phase. The clock generator may be a ring oscillator circuit (ROSC), and each of the plurality of clock signals may be outputted from each oscillator circuit stage of the ring oscillator circuit, wherein the number of clock signals is the same as the number of oscillator circuit stages of the ring oscillator circuit.

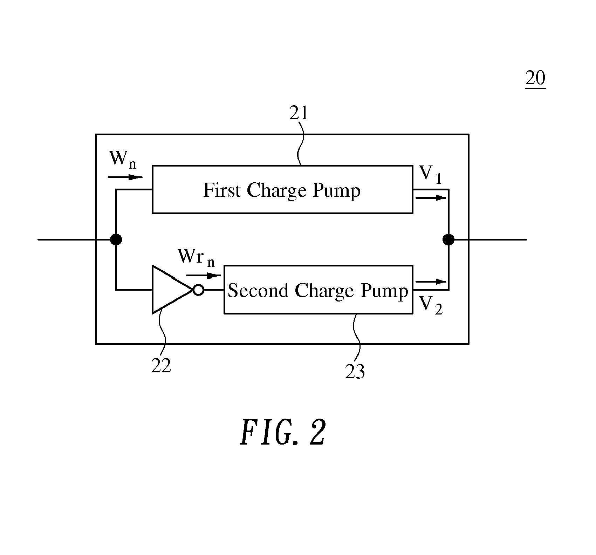

As shown in FIG. 1 and FIG. 2, the plurality of charge pump modules 20 are electrically connected with the clock generator 10 and each of the plurality of charge pump modules 20 is inputted with a corresponding clock signal of the plurality of clock signals, wherein each corresponding clock signal has a different phase.

As shown in FIG. 1 and FIG. 2, a first charge pump 21 of each of the plurality of charge pump modules 20 is inputted with the corresponding clock signal and outputs a first voltage V1. An inverter 22 of each of the plurality of charge pump modules 20 is inputted with the corresponding clock signal and outputs an inverted corresponding clock signal (Wr1∼Wrn) that is the inverse of the corresponding clock signal (i.e., the phase changes by 180°). A second charge pump 23 of each of the plurality of charge pump modules 20 is inputted with the inverted corresponding clock signal and outputs a second voltage V2.

As shown in FIG. 1 and FIG. 2, the first voltage V1 outputted by the first charge pump 21 of each of the plurality of charge pump modules 20 includes ripples or noises of the corresponding clock signal, while the second voltage V2 outputted by the second charge pump 23 includes inverted ripples or noises; therefore, the ripples or noises may be eliminated by adding the first voltage V1 and the second voltage V2 since the ripples or noises have the same amplitude and opposite phases, and thus the voltage outputted by the plurality of charge pump modules 20 becomes a DC voltage that is the sum of the first voltage V1 and the second voltage V2 without ripples or noises.

As shown in FIG. 1, the adder unit 30 is inputted with and adds the first voltage V1 and the second voltage V2 of each of the plurality of charge pump modules 20 and outputs an output voltage Vout, wherein the output voltage Vout is a DC voltage.

As described in above, the low-ripple power supply 100 inputs each of the plurality of clock signals (W1∼Wn) each having a different phase generated by the clock generator 10 into each of the plurality of charge pump modules 20, and each of the plurality of charge pump modules 20 sends the inputted corresponding clock signal into two paths to be inputted into the first charge pump 21 and the second charge pump 23, respectively, wherein the corresponding clock signal inputted into the second charge pump 23 undergoes an inversion by the inverter 22 in advance.

By adding the first voltage V1 outputted by the first charge pump 21 and the second voltage V2 outputted by the second charge pump 23, the ripples may be eliminated since the ripples of the first voltage V1 and the second voltage V2 have opposite phases, and finally the adder unit 30 adds the voltages outputted by each of the plurality of charge pump modules 20 to yield a low-ripple DC voltage.

While the invention has been described by way of example and in terms of the preferred embodiments, it is to be understood that the invention is not limited to the disclosed embodiments. On the contrary, it is intended to cover various modifications and similar arrangements as would be apparent to those skilled in the art. Therefore, the scope of the appended claims should be accorded the broadest interpretation so as to encompass all such modifications and similar arrangements.

## Claims

1. A low-ripple power supply (100), comprising:
a clock generator (10), outputting a plurality of clock signals, wherein each of the plurality of clock signals has a different phase;
a plurality of charge pump modules (20), electrically connected with the clock generator (10) and each inputted with a corresponding clock signal of the plurality of clock signals, wherein the each of the plurality of charge pump modules (20) comprises:
a first charge pump (21), inputted with the corresponding clock signal and outputting a first voltage;
an inverter (22), inputted with the corresponding clock signal and outputting an inverted corresponding clock signal that is the inverse of the corresponding clock signal; and
a second charge pump (23), inputted with the inverted corresponding clock signal and outputting a second voltage; and
an adder unit (30), inputted with and adding the first voltage and the second voltage of each of the plurality of charge pump modules (20) and outputting an output voltage.

2. The low-ripple power supply (100) as claimed in claim 1, wherein the clock generator (10) is a ring oscillator circuit (ROSC).

3. The low-ripple power supply (100) as claimed in claim 1, wherein the output voltage is a direct current (DC) voltage.
